# EUROPÄISCHE PATENTSCHRIFT

(11) **EP 1 631 469 B1**
(45) Veröffentlichungstag und Bekanntmachung des Hinweises auf die Patenterteilung: **18.06.2008**
(21) Anmeldenummer: 04738551.3
(22) Anmeldetag: 25.05.2004
(51) Int. Cl.: B60K 15/04, B29C 47/06

(54) **EXTRUSIONSBLASGEFORMTES EINFÜLLROHR AUS KUNSTSTOFF**
EXTRUSION BLOW-MOLDED FILLING TUBE MADE OF PLASTIC
TUBE DE REMPLISSAGE EN PLASTIQUE FORME PAR EXTRUSION-SOUFFLAGE

(30) Priorität: 11.06.2003 DE 10326642
(43) Veröffentlichungstag der Anmeldung: 08.03.2006
(73) Patentinhaber: Kautex Textron GmbH & Co. KG., 53229 Bonn (DE)
(72) Erfinder: FROITZHEIM, Thomas, 53757 St. Augustin (DE); HÄGER, Frank, 53757 St. Augustin (DE); BORCHERT, Matthias, 53179 Bonn (DE); ENGELS, Marco, 53229 Bonn (DE); REINELT, Georg, 53229 Bonn (DE)
(74) Vertreter: Kierdorf, Theodor
(86) Internationale Anmeldenummer: PCT/DE2004/001082
(87) Internationale Veröffentlichungsnummer: WO 2004/110801

(56) Entgegenhaltungen:
- US-A- 5 916 945
- US-B1- 6 170 535
- US-B1- 6 508 275

## Beschreibung

Die Erfindung betrifft ein extrusionsblasgeformtes Rohr aus Kunststoff, insbesondere ein Einfüllrohr für einen Kfz-Kraftstofftank, welches aus einem mehrschichtigen Coextrudat besteht und endseitig jeweils Mündungsbereiche aufweist, die jeweils Flansche und/oder zur Verschweißung mit Anschlussbauteilen vorgesehene Stirnflächen aufweisen.

Solche Einfüllrohre sind üblicherweise einseitig kalibriert. Unter Kalibrierung versteht man das Erzeugen einer definierten Wandstärke und eines definierten Innendurchmessers des herzustellenden Bauteils. Hohlkörper, die durch Blasformen hergestellt wurden, besitzen bekanntermaßen herstellungsbedingt keine definierte Wandstärke. Der von dem Extruder abgenommene schlauchförmige Vorformling wird innerhalb einer mehrteiligen Blasform, deren Formhohlraum bzw. Kavität die Außenkontur des fertigen Bauteils bestimmt, mittels Blasluft aufgeweitet. Naturgemäß lässt sich bei einem so hergestellten Einfüllrohr nur eine definierte Außenkontur erzeugen. Aufgrund unterschiedlicher Reckung des in der Form aufgeweiteten Materials ist die Wandstärke des so erhaltenen Hohlkörpers nicht überall gleich. Wenn Rohre oder andere Bauteile hergestellt werden sollen, die mit anderen Bauteilen verschweißt werden müssen, ist es erforderlich, im Bereich der zur Verschweißung vorgesehenen Flächen eine definierte Wandstärke und eine definierte Anlagefläche bzw. Schweißfläche bereitzustellen. Dies ist insbesondere bei der Herstellung von Einfüllrohren von Kfz-Kraftstoffbehältern besonders wichtig. Diese aus Kunststoff hergestellten, extrusionsblasgeformten Einfüllrohre werden im Bereich einer Einfüllöffnung eines ebenfalls durch Extrusionsblasen hergestellten Kraftstoffbehälters aus Kunststoff mit letzterem verschweißt. Die Schweißverbindung ist unter anderem bei Montage des Kraftstoffbehälters Kräften ausgesetzt. Eine gewisse Mindestbelastbarkeit der Schweißverbindung ist daher unerlässlich, nicht zuletzt auch aus Dichtigkeitsgründen.

Bekannte Einfüllrohre sind häufig als sogenannte 3D-Teile (in mehreren Ebenen im Raum gekrümmt) und mehrschichtig ausgebildet. Diese werden üblicherweise einerseits an einem Kraftstoffbehälter aus Kunststoff, andererseits an einem anderen Anschlussbauteil, beispielsweise an einem elektrisch leitenden Kragen oder dergleichen verschweißt. In diesem Falle ist eine entsprechend angepasste Ausbildung des Einfüllrohres beidendig oder bei einem mehrfach verzweigten Rohr an mehreren Stellen wünschenswert.

Bekannte Einfüllrohre sind bisher als einseitig kalibrierte Einfüllrohre hergestellt worden. Das dem kalibrierten Ende des Rohrs gegenüberliegende Ende wurde bislang als sogenannter "verlorener Kopf" geblasen. Hierbei handelt es sich um eine endseitig des Blasteils vorgesehene domförmige Kuppe, die nach Fertigstellung des Blasformteils nachgearbeitet, beispielsweise ausgekreist oder abgeschnitten wird. Um eine zum Verschweißen geeignete Trennfläche an diesem Ende des Einfüllrohrs zu erzeugen, ist man beispielsweise bislang so verfahren, dass das geschlossene nachzubearbeitende Ende des Vorformlings nach dem Schließen der Blasform mittels eines Stempels zur Bildung einer definierten Trennfläche von außen angestaucht wurde. Im Bereich der von der Anstauchung erzeugten Trennfläche wurde der verlorene Kopf des Vorformlings in einem Nachbearbeitungsschritt abgeschnitten.

Durch die Erzeugung einer umlaufenden Trennfläche oder eines umlaufenden Flansches wurde auf diese Art und Weise eine Faltung des Materials im Mündungsbereich des Rohrs bewirkt, so dass, wenn das Rohr als mehrschichtiges Rohr hergestellt wurde, die Schichtenlage des Coextrudats in diesem Bereich nicht mehr der Solllage entsprach.

Dies ist insbesondere problematisch, wenn das Coextrudat Barriereschichten für Kohlenwasserstoff aus EVOH (Ethylen-Vinyl- Alkohol) enthält, die beispielsweise nicht mit PE (Polyethylen) verschweißbar sind.

Aus der US 6,170,535 B1 (beinhaltet auch die Merkmale des Oberbegriffs des Anspruch 1) ist bereits ein mehrlagiges, coextrudiertes und blasgeformtes Kunststoffrohr bekannt, dass als Einfüllrohr für einen Kraftstoffbehälter aus Kunststoff dienen soll. Das Rohr soll mit einem Kunststoffbehälter verschweißt werden. Hierzu wird in der US 6,170,535 B1 vorgeschlagen, dass die Innenschicht des Einfüllrohres sowie die daran angrenzende Schicht wenigstens 50-60 Gew. % des Einfüllrohres ausmachen sollen, damit gewährleistet ist, dass im Bereich der Verbindung zwischen Einfüllrohr und Kraftstoffbehälter hinreichend verschweißbares Material vorgesehen ist.

Aus der US 6,508,275 B1 ist ein Einfüllrohr aus Kunststoff für einen Kraftstoffbehälter aus Kunststoff bekannt, bei welchem bei der Herstellung zwischen den beiden Enden ein flexibler, einstückig ausgebildeter Balg vorgesehen ist.

Der Erfindung liegt daher die Aufgabe zugrunde, ein extrusionsblasgeformtes Einfüllrohr aus Kunststoff der eingangs genannten Art so zu verbessern, dass die Verschweißbarkeit der Mündungsbereiche sowie die Belastbarkeit der herzustellenden Verschweißung verbessert sind.

Die der Erfindung zugrundeliegende Aufgabe wird gelöst mit den Merkmalen des Anspruchs 1. Mit anderen Worten, zwei gegenüberliegende Mündungsbereiche des Einfüllrohrs weisen jeweils einen definierten Innendurchmesser und eine definierte Wandstärke auf, so dass die jeweiligen Mündungsbereiche gleichermaßen zur Verschweißung mit oder an Anschlussbauteilen geeignet sind. Unter Anschlussbauteil im Sinne der Erfindung kann hier sowohl die Außenhaut des Kfz-Kraftstofftanks als auch beispielsweise ein elektrisch leitender Kragen an dem Einfüllrohr zu verstehen sein.

Unter Einfüllrohr im Sinne der Erfindung kann auch ein komplexes mehrröhriges Bauteil zu verstehen sein, welches mehr als zwei Öffnungen aufweist, wie dies bei Luftkanälen, Kühlwasserleitungen, Einfüllrohren oder dergleichen für Kfz häufig der Fall ist.

Die beidseitige bzw. beidendige Kalibrierung von extrusionsblasgeformten Hohlkörpern ist insbesondere bisher nicht bei sogenannten 3D-Teilen bekannt, d.h. bei Rohren, die in wenigstens zwei Ebenen gekrümmt sind. Das Einfüllrohr gemäss der Erfindung kann beispielsweise als in zwei oder mehr Ebenen gekrümmtes komplexes 3D-Teil ausgebildet sein. Zweckmäßigerweise handelt es sich hierbei um ein nahtlos hergestelltes butzenfreies Rohr.

Besonders vorteilhaft ist es, dass die innere Schicht des Coextrudats bezogen auf den Querschnitt des Einfüllrohrs zumindest überwiegend die zur Verschweißung vorgesehene Stirnfläche des jeweiligen Mündungsbereichs bildet. Bei dem beschriebenen mehrschichtigen Aufbau des Vorformlings hat dies den Vorzug, dass eine besonders gute Verschweißbarkelt des Einfüllrohrs gegeben ist, wenn die innere Schicht des Einfüllrohrs aus einem zur Verschweißung mit dem Anbauteil bzw. Anschlussbauteil kompatiblen Kunststoff besteht. Häufig ist es beispielsweise so, dass die Außenhaut von Kunststoff-Kraftstofftanks aus Polyethylen besteht, in diesem Falle ist es sinnvoll, wenn die innere Schicht des Einfüllrohrs ebenfalls aus Polyethylen besteht.

Bei einer besonders vorteilhaften Ausgestaltung des extrusionsblasgeformten Einfüllrohrs nach der Erfindung ist vorgesehen, dass dieses eine Barriereschicht gegen Kohlenwasserstoffe umfasst, die aus einem für Kohlenwasserstoffe schwer oder nicht permeablen Kunststoff besteht.

Die Barriereschicht kann beispielsweise aus EVOH (Ethylen-Vinyl-Alkohol) bestehen.

Vorzugsweise ist die Barriereschicht vollständig in Polyethylenschichten eingebettet.

Das Einfüllrohr kann beispielsweise aus einem fünf- oder sechsschichtigen Coextrudat bestehen, wobei in bekannter Art und Weise wenigstens eine Schicht aus einem Rezyklat besteht.

Die Erfindung wird nachstehend anhand eines in den Zeichnungen dargestellten Ausführungsbeispiels erläutert.

Es zeigen:
- Fig. 1: einen Längsschnitt durch ein Einfüllrohr der Erfindung und
- Fig. 2: einen vergrößerten Teilschnitt durch den Mündungsbereich des in Fig. 1 dargestellten Einfüllrohrs, der den Schichtenverlauf in der Wandung des Einfüllrohrs veranschaulicht.

Das Einfüllrohr 1 gemäß Ausführungsbeispiel ist als sechsschichtig koextrudiertes Rohr ausgebildet, welches durch Extrusionsblasformen erhalten wurde. Es handelt sich hierbei um ein Einfüllrohr 1, welches nahtlos, d. h. butzenfrei hergestellt wurde. Solche abfallarmen Herstellungsverfahren zur Herstellung von mehrfach räumlich gekrümmten Bauteilen, d. h. in mehreren Ebenen im Raum gekrümmt, sind hinlänglich bekannt und sollen nicht Gegenstand der Erfindung sein. Die Schichtung des Einfüllrohrs 1 umfasst von innen nach außen eine Innenschicht 2 als reine Polyethylenschicht, eine Haftvermittlerschicht 3, eine Barriereschicht 4 aus EVOH, eine weitere Haftvermittlerschicht 3, eine Zwischenschicht 5 als Regeneratschicht und eine Außenschicht 6 als eingefärbte Polyethylenschicht.

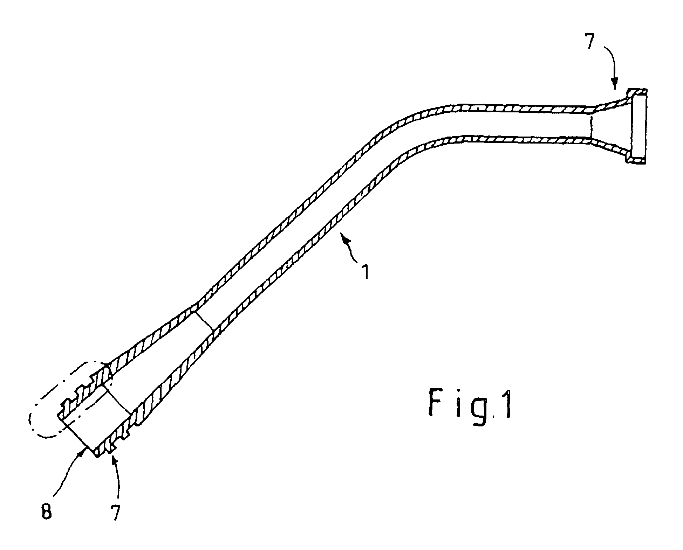

Wie dies ohne weiteres aus Fig. 1 ersichtlich ist, umfasst das Einfüllrohr 1 zwei Mündungsbereiche 7, die jeweils nach außen aufgeweitet sind. Beide Mündungsbereiche 7 weisen eine definierte Wandstärke und einen definierten Innendurchmesser auf.

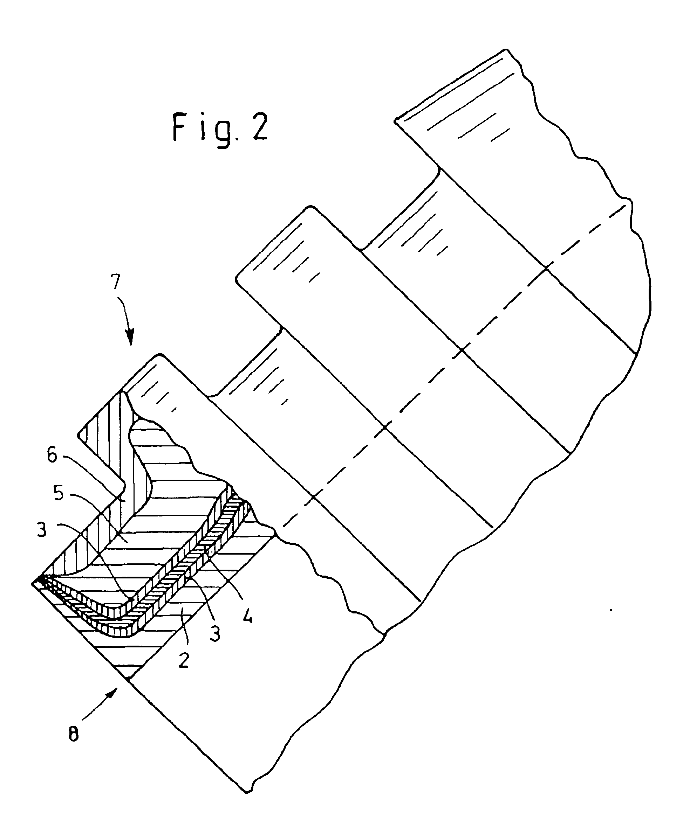

Aus Fig. 2 ist ersichtlich, dass die Stirnflächen 8 des Einfüllrohrs 1 in den Mündungsbereichen 7 zumindest überwiegend durch die Innenschicht 2 aus reinem Polyethylen gebildet werden. Darüber hinaus besitzt das in beiden Mündungsbereichen 7 kalibrierte Einfüllrohr 1 dort jeweils eine über den gesamten Umfang desselben gleichbleibende Wandstärke, so dass die Stirnflächen 8 für die Verschweißung mit einem anderen Kunststoffbauteil optimale Eigenschaften aufweisen. Der in Fig. 2 dargestellte Verlauf der Schichten des Coextrudats im Mündungsbereich 7 des Einfüllrohrs 1 wurde durch die Einführung eines besonderen Kalibrierdorns in jedes der Enden des Einfüllrohrs 1 bei dessen Herstellung erzielt.

### Bezugszeichenliste

- 1: Einfüllrohr
- 2: Innenschicht
- 3: Haftvermittlerschicht
- 4: Barriereschicht aus EVOH
- 5: Zwischenschicht
- 6: Außenschicht
- 7: Mündungsbereiche
- 8: Stirnflächen

## Patentansprüche

1. Extrusionsblasgeformtes Rohr (1) aus Kunststoff, insbesondere Einfüllrohr für einen Kfz-Kraftstofftank, welches aus einem mehrschichtigen Coextrudat besteht und endseitig jeweils Mündungsbereiche (7) aufweist, die jeweils Flansche und/oder zur Verschweißung mit Anschlussbauteilen vorgesehene Stirnflächen (8) aufweisen, **dadurch gekennzeichnet, dass** wenigstens zwei an verschiedenen Enden gelegene Mündungsbereiche (7) kalibriert sind und dass die Innenschicht (2) des Coextrudats bezogen auf den Querschnitt des Einfüllrohrs (1) vollständig die zu Verschweißung vorgesehene Stirnfläche (8) des jeweiligen Mündungsbereichs bildet.

2. Extrusionsblasgeformtes Einfüllrohr nach Anspruch 1, **dadurch gekennzeichnet, dass** es in wenigstens zwei Ebenen gekrümmt ist.

3. Extrusionsblasgeformtes Einfüllrohr nach einem der Ansprüche 1 oder 2, **dadurch gekennzeichnet, dass** es nahtlos (butzenfrei) geformt ist.

4. Extrusionsblasgeformtes Einfüllrohr nach einem der Ansprüche 1 bis 3, **dadurch gekennzeichnet, dass** dieses eine Barriereschicht (4) gegen Kohlenwasserstoffe umfasst, die aus einem für Kohlenwasserstoffe schwer oder nicht permeablen Kunststoff besteht.

5. Extrusionsblasgeformtes Einfüllrohr nach Anspruch 4, **dadurch gekennzeichnet, dass** die Barriereschicht aus EVOH (Ethylen-Vinyl-Alkohol) besteht.

6. Extrusionsblasgeformtes Einfüllrohr nach einem der Ansprüche 3 oder 4, **dadurch gekennzeichnet, dass** die Barriereschicht vollständig in Polyethylenschichten eingebettet ist.

7. Extrusionsblasgeformtes Einfüllrohr nach einem der Ansprüche 1 bis 6, **dadurch gekennzeichnet, dass** dieses aus einem fünf- oder sechsschichtigen Coextrudat besteht.

## Claims

1. An extrusion blow-moulded pipe (1) of plastic material, in particular a filling pipe for a motor vehicle fuel tank, which comprises a multi-layer coextrudate and which has respective mouth regions (7) at each end, which each have flanges and/or end faces (8) provided for welding to connecting components, **characterised in that** at least two mouth regions (7) at different ends are calibrated and the inner layer (2) of the coextrudate, with respect to the cross-section of the filling pipe (1), completely forms the end face (8), which is provided for welding, of the respective mouth region (7).

2. An extrusion blow-moulded filling pipe according to claim 1 **characterised in that** it is curved in at least two planes.

3. An extrusion blow-moulded filling pipe according to one of claims 1 and 2 **characterised in that** it is formed seamlessly (core-free).

4. An extrusion blow-moulded filling pipe according to one of claims 1 to 3 **characterised in that** it includes a barrier layer (4) against hydrocarbons, which comprises a plastic material which is impermeable or difficultly permeable for hydrocarbons.

5. An extrusion blow-moulded filling pipe according to claim 4 **characterised in that** the barrier layer comprises EVOH (ethylene vinyl alcohol).

6. An extrusion blow-moulded filling pipe according to one of claims 3 or 4 **characterised in that** the barrier layer is embedded completely in polyethylene layers.

7. An extrusion blow-moulded filling pipe according to one of claims 1 to 6 **characterised in that** it comprises a five-layer or six-layer coextrudate.

## Revendications

1. Tube en plastique formé par extrusion-soufflage (1), en particulier tube de remplissage pour un réservoir à carburant de véhicule automobile, lequel est constitué d'un coextrudat à plusieurs couches et comprend à son extrémité respectivement des zones d'embouchure (7), qui comprennent respectivement des rebords et/ou des surfaces frontales (8) prévues pour la soudure avec des composants de raccordement, **caractérisé en ce qu'au** moins deux zones d'embouchure (7) placées aux différentes extrémités sont calibrées et **en ce que** la couche intérieure (2) du coextrudat par rapport à la section transversale du tube de remplissage (1) forme entièrement la surface frontale (8) de la zone d'embouchure respective prévue pour le soudage.

2. Tube de remplissage formé par extrusion-soufflage selon la revendication 1, **caractérisé en ce qu'il** est courbé dans au moins deux plans.

3. Tube de remplissage formé par extrusion-soufflage selon l'une quelconque des revendications 1 ou 2, **caractérisé en ce qu'il** est formé sans soudure (sans saillie).

4. Tube de remplissage formé par extrusion-soufflage selon l'une quelconque des revendications 1 à 3, **caractérisé en ce que** celui-ci comporte une couche barrière (4) protégeant des hydrocarbures, qui est constituée d'une matière plastique ne laissant pas passer les hydrocarbures ou non perméable.

5. Tube de remplissage formé par extrusion-soufflage selon la revendication 4, **caractérisé en ce que** la couche barrière est constituée d'EVOH (éthylène-alcool vinylique).

6. Tube de remplissage formé par extrusion-soufflage selon l'une quelconque des revendications 3 ou 4, **caractérisé en ce que** la couche barrière est entièrement encastrée dans des couches de polyéthylène.

7. Tube de remplissage formé par extrusion-soufflage selon l'une quelconque des revendications 1 à 6, **caractérisé en ce que** celui-ci est constitué d'un coextrudat à cinq ou six couches.
